# EUROPÄISCHE PATENTSCHRIFT

(11) **EP 2 228 533 B1**
(45) Veröffentlichungstag und Bekanntmachung des Hinweises auf die Patenterteilung: **13.05.2015**
(21) Anmeldenummer: 10155598.5
(22) Anmeldetag: 05.03.2010
(51) Int. Cl.: F03D 1/00, F03D 1/06

(54) **Verfahren und Anordnung zum Transportieren von Komponenten einer Windenergieanlage sowie Montage-Plattform**
Method and assembly for transporting components of a wind energy system and assembly platform
Procédé et ensemble de transport de composants d'une éolienne et plate-forme de montage

(30) Priorität: 10.03.2009 DE 102009011915
(43) Veröffentlichungstag der Anmeldung: 15.09.2010
(60) Teilanmeldung: 15152947.6
(73) Patentinhaber: Senvion SE, 22297 Hamburg (DE)
(72) Erfinder: Güsloff-Below, Rainer, 23568, Lübeck (DE)
(74) Vertreter: Seemann, Ralph

(56) Entgegenhaltungen:
- DE-A1-102007 012 848
- GB-A- 2 090 894
- US-A- 3 734 046
- US-A1- 2005 163 616
- US-A1- 2006 120 809

## Beschreibung

Die Erfindung betrifft ein Verfahren zur Montage eines Rotors einer Windenergieanlage auf offener See. Außerdem betrifft die Erfindung eine Anordnung von wenigstens zwei Rotorblättern einer Windenergieanlage und einen Schwimmkörper, der für den Transport der Rotorblätter zu einem Aufstellungsort der Windenergieanlage auf offener See vorgesehen ist.

Zur Erstellung von Windenergieanlagen auf offener See, also offshore, ist es bekannt, die Komponenten der Windenergieanlagen mittels Jack-up-Bargen wenigstens teilweise vormontiert zum Aufstellungsort der Windenergieanlage zu bringen und dann dort auf übliche Weise aufzustellen. Hierzu wird aus Kostengründen und aufgrund dessen, dass eine Vormontage an Land nicht die großen Probleme aufwirft, die eine Montage auf Wasser aufwirft, zumindest der Rotor an Land vormontiert und auf die Jack-up-Barge montiert aufgeladen.

Dieses ist beispielsweise aus dem Lehrbuch von Erich HAU, Wind Turbines, 2nd Edition, Springer-Verlag Berlin Heidelberg 2006, Seiten 646 bis 649, bekannt.

Aus EP 1 356 205 B1 ist ein Verfahren zum Platzieren mindestens einer Windmühle auf offener See bekannt, wobei die Windmühle zumindest zum größeren Teil an oder nahe dem Land aufgebaut und in einem Gerüst gehalten wird, wobei die Windmühle mit dem Gerüst auf einen Schwimmkörper platziert und mit dem Schwimmkörper zu einem Aufstellort transportiert wird, wobei die Windmühle mittels einer Hebevorrichtung von dem Schwimmkörper genommen und auf ein im Wasser angeordnetes Fundament platziert wird. Insbesondere ist es aus diesem Dokument bekannt, mehrere fertig montierte Windenergieanlagen auf einer Jack-up-Barge zu transportieren und auf offener See bzw. offenem Wasser aufzustellen.

US 2005/0163616 A1 beschreibt den Transport von Teilen einer Windenergieanlage zu einem Aufstellungsort auf See.

DE 10 2007 012 848 A1 offenbart ein Verfahren zum Transport, Errichten und Austausch einer Gondel inklusive Rotor einer Offshore-Windenergieanlage und ein Wasserfahrzeug zur Durchführung dieses Verfahrens.

Es ist Aufgabe der vorliegenden Erfindung, ein effizientes Verfahren zur Montage eines Rotors einer Windenergieanlage auf offener See anzugeben. Es ist ferner Aufgabe der vorliegenden Erfindung, eine platzsparende und sichere Anordnung von wenigstens zwei Rotorblättern einer Windenergieanlage und einem Schwimmkörper anzugeben.

Ein Verfahren zum Transportieren von Komponenten einer Windenergieanlage zu einem Aufstellungsort auf offener See weist die folgenden Verfahrensschritten auf:
- Anordnen von wenigstens zwei Rotorblättern auf einem Schwimmkörper, wobei jedes Rotorblatt eine Längsachse aufweist, wobei die Längsachsen der Rotorblätter im Wesentlichen parallel oder antiparallel zueinander angeordnet werden, und
- Bewegen des Schwimmkörpers in Richtung des Aufstellungsortes.

Durch dieses Verfahren und die Verwendung von entsprechenden Schwimmkörpern, die vergleichsweise klein sind gegenüber den Schwimmkörpern, die im Stand der Technik verwendet werden, und durch die erfindungsgemäße sehr platzsparende Lagerung passen die Schwimmkörper mit den darauf aufgebrachten oder angeordneten wenigstens zwei Rotorblättern auch durch gängige Schleusen. Es können mehrere derartige Schwimmkörper zum Aufstellungsort durch einen Schlepper beispielsweise geschleppt werden, so dass auch für den Transport der Komponenten der Windenergieanlage wenig Zeit benötigt wird. Vor Ort, also am Aufstellungsort, ist es dann effizient möglich, die Komponenten der Windenergieanlage vom Schwimmkörper zu entnehmen und die Windenergieanlage aufzustellen.

Sind bzw. werden drei Rotorblätter derart auf dem Schwimmkörper angeordnet, dass deren Längsachsen parallel und/oder antiparallel zueinander sind, wobei insbesondere die Rotorblätter quer zu deren Längsachse nebeneinander und bevorzugt horizontal zueinander sind, ist ein sehr platzsparender Transport möglich. Durch diese Positionierung der Rotorblätter ist außerdem eine effiziente Montage der Rotorblätter auf offener See zu einem Rotor möglich. Vorzugsweise ist eine Rotornabe an einem Rotorblatt, insbesondere dem Rotorblatt, das auf dem Schwimmkörper in der Mitte angeordnet ist, montiert oder wird entsprechend montiert. Bei einer Vormontierung der Rotornabe an einem Rotorblatt wird bei der Montage auf offener See viel Zeit gespart. Alternativ ist die Rotornabe noch nicht an einem Rotorblatt montiert. Die Rotornabe kann dann vorzugsweise im Bereich der Blattwurzel eines Rotorblatts, insbesondere des in der Mitte angeordneten Rotorblatts, insbesondere bei paralleler oder antiparalleler Anordnung der drei Rotorblätter vorgesehen sein.

Zudem kann ein Maschinenhaus und/oder wenigstens ein Turmsegment auf dem Schwimmkörper angeordnet werden bzw. ist auf dem Schwimmkörper angeordnet. So ist es möglich, bis auf die Gründung sämtliche Komponenten einer Windenergieanlage auf einem einzigen Schwimmkörper unterzubringen. Vorzugsweise sind auch nur die Komponenten einer einzigen Windenergieanlage auf dem Schwimmkörper angeordnet.

Die Aufgabe wird durch ein Verfahren zur Montage eines Rotors einer Windenergieanlage auf offener See gelöst, wobei wenigstens zwei Rotorblätter auf einem Schwimmkörper zunächst im Wesentlichen parallel und/oder antiparallel angeordnet sind, wobei anschließend auf oder über dem Wasser der offenen See die wenigstens zwei Rotorblätter auf dem Schwimmkörper gegeneinander bzw. relativ zueinander verfahren werden, so dass die Blattwurzel der Rotorblätter zueinander und/oder in Richtung eines gemeinsamen Zentrums gerichtet sind, wobei das gemeinsame Zentrum ein Schnittpunkt der verlängerten Längsachsen der Rotorblätter über die Blattwurzel hinaus ist, und Montieren wenigstens eines Rotorblatts an eine Rotornabe, die im Bereich des Zentrums angeordnet ist, wobei die Rotornabe an einem Rotorblatt vormontiert ist oder wird, wobei das relativ zueinander Verfahren der Rotorblätter in einer im Wesentlichen horizontalen Ebene geschieht. Hierbei sind die Rotorblätter zunächst vorzugsweise quer zu deren Längsachsen nebeneinander angeordnet, bevor sie relativ zueinander verfahren werden.

Vorzugsweise liegen die Rotorblätter beim Transport zunächst im Wesentlichen auf gleicher Höhe quer zu deren Längsachse parallel zueinander. Mit der gleichen Höhe ist in diesem Zusammenhang gemeint, dass die Rotorblätter horizontal miteinander an den Enden fluchten.

Durch das erfindungsgemäße Verfahren ist eine sehr effiziente und schnelle Montage eines Rotors auf offener See möglich. Die Montage geschieht vorzugsweise dann, wenn der Schwimmkörper an einer Montage-Plattform, z. B. einer Jack-up-Plattform, angebracht ist und entsprechend mit der Jack-up-Plattform über das Wasserniveau gehoben wurde. Alternativ kann es sich bei der Montage-Plattform auch um einen Halbtaucher handeln, der vor oder nach Anbringen des Schwimmkörpers durch Fluten wenigstens eines Ballast-Tanks in den halbgetauchten Zustand versetzt wird oder ist.

Der Halbtaucher ist in halbgetauchtem Zustand, wenn der Schwimmkörper in die Aufnahmevorrichtung eingebracht wird. Anschließend kann der Halbtaucher weiter abgesenkt werden, beispielsweise durch weiteres Fluten von Ballast-Tanks im Halbtaucher oder durch Fluten von Ballast-Tanks im Schwimmkörper.

Es kann auch ein Kran auf dem Halbtaucher angeordnet sein, mittels dessen die Komponenten der Windenergieanlage von dem Schwimmkörper entnommen werden können und entsprechend am Standort der Windenergieanlage aufgebaut werden können. Damit der Schwimmkörper auch bei Wellengang sicher in die Aufnahmevorrichtung bzw. insbesondere Aussparung der Montage-Plattform eingebracht werden kann, kann der Schwimmkörper auch entsprechend durch Beschweren, beispielsweise durch Fluten wenigstens eines Ballast-Tanks abgesenkt werden, so dass dieser auch als Halbtaucher ausgebildet sein kann. Hierdurch ist auch der Schwimmkörper geringeren Schwankungen durch den an der Wasseroberfläche befindlichen Seegang ausgesetzt.

Sofern die als Halbtaucher ausgebildete Montage-Plattform eine Aufnahmevorrichtung aufweist, die eine Auflagefläche für den Schwimmkörper hat, macht es Sinn, zum Andocken des Schwimmkörpers auf der Montage-Plattform die Ballast-Tanks des Schwimmkörpers vollständig zu lenzen, diesen in die Aufnahmevorrichtung des abgesenkten Halbtauchers einschwimmen zu lassen und dann die Ballast-Tanks des Schwimmkörpers möglichst schnell zu fluten, um so eine stabile Auflage auf die Aufnahmevorrichtung zu erzielen.

Besonders effizient und einfach ist das Verfahren dann, wenn die Rotorblätter jeweils auf einem, insbesondere schienengebundenen, Transportwagen und/oder eine, insbesondere auf dem Schwimmkörper lösbar fixierte, Aufnahmevorrichtung aufgelegt sind. Hierbei sind die Rotorblätter vorzugsweise lösbar fixierbar auf dem jeweiligen Transportwagen befestigt, wobei jedes Rotorblatt wenigstens einem Transportwagen zugeordnet ist, bzw. jedes Rotorblatt liegt wenigstens auf einem für dieses Rotorblatt vorgesehenen Transportwagen. Der Transportwagen ist vorzugsweise so relativ zum Rotorblatt positioniert, dass der Schwerpunkt des Rotorblatts über dem Transportwagen ist. Bei dem Rotorblatt, bei dem die Rotornabe montiert bzw. vormontiert ist, ist entsprechend der Schwerpunkt der Kombination aus Rotorblatt und Rotornabe relevant, so dass der Transportwagen entsprechend unter dem Schwerpunkt der Gesamtkombination angeordnet ist.

Zur Montage der Rotorblätter an eine Rotornabe kann wenigstens ein Rotorblatt ausschließlich um beispielsweise dessen Schwerpunkt verschwenkt werden, um mit dessen Rotorblattwurzel in den Bereich der Rotornabe zu gelangen. Es kann dann mit kleineren linearen Bewegungen in Längsachse des Rotorblatts bzw. quer zur Längsachse in horizontaler Ebene oder in vertikaler Ebene eine genaue Justage zur Montage ermöglicht sein. Ein weiteres Rotorblatt kann vorher schon an einer Rotornabe montiert oder vormontiert sein und die Position des Transports beibehalten bzw. ausschließlich längsaxial bewegt werden.

Alternativ ist es möglich, aus einer zunächst parallelen Anordnung der Rotorblätter nebeneinander wenigstens ein Rotorblatt auf einem relativ kurzen Verfahrweg mit anschließender Verschwenkung bzw. gleichzeitiger Verschwenkung so zu positionieren, dass die Blattwurzel in den Bereich der Rotornabe gelangt, um eine Montage an der Rotornabe zu ermöglichen.

Vorzugsweise kann ein Rotorblatt oder können mehrere Rotorblätter anstelle eines Aufliegens auf einem Transportwagen auf einer Aufnahmevorrichtung aufliegen. Die Aufnahmevorrichtung ist vorzugsweise fest bzw. lösbar fixierbar mit dem Schwimmkörper verbunden. Vorzugsweise hat die Aufnahmevorrichtung eine Drehmechanik, mittels der das jeweilige aufliegende Rotorblatt in einer horizontalen Ebene verschwenkbar ist. Vorzugsweise ist eine Justiervorrichtung auf oder an der Aufnahmevorrichtung vorgesehen, mittels der die Rotorblätter seitlich und/oder vertikal justiert werden, um eine Montage an einer Rotornabe zu ermöglichen. Vorzugsweise können die Aufnahmevorrichtungen an unterschiedlichen Stellen auf dem Schwimmkörper angeordnet werden, um so die Verwendung des Schwimmkörpers für verschieden große Rotorblätter bzw. verschieden große Rotoren zu ermöglichen, bei denen die Schwerpunkte an unterschiedlichen Orten relativ zum Rotormittelpunkt liegen.

Vorzugsweise ist beim Auslaufen aus dem Hafen bzw. vor Löschung des Schwimmkörpers ein Schwenkbereich wenigstens eines Rotorblatts mit weiteren Bauteilen der Windenergieanlage, beispielsweise einem Turmsegment, mehreren Turmsegmenten und/oder einem Maschinenhaus, belegt.

Die Aufgabe wird ferner durch eine Anordnung von wenigstens zwei Rotorblättern einer Windenergieanlage und einem Schwimmkörper gelöst, wobei der Schwimmkörper für den Transport der Rotorblätter zu einem Aufstellungsort der Windenergieanlage auf offener See vorgesehen ist, wobei die Rotorblätter auf dem Schwimmkörper nebeneinander angeordnet sind, so dass die Längsachsen der Rotorblätter parallel und/oder antiparallel zueinander sind, wobei für jedes Rotorblatt ein auf dem Schwimmkörper lösbar fixierbarer Transportwagen oder eine Aufnahmevorrichtung vorgesehen ist, auf dem oder der das jeweilige Rotorblatt aufgelegt, insbesondere lösbar fixiert aufgelegt, ist, wobei wenigstens eine Aufnahmevorrichtung eine Drehmechanik zum Verschwenken eines auf der Aufnahmevorrichtung liegenden Rotorblattes in horizontaler Ebene aufweist.

Vorzugsweise liegen die Längsachsen der Rotorblätter im Wesentlichen horizontal. Vorzugsweise liegen die Rotorblätter queraxial nebeneinander, also insbesondere quer zu den Längsachsen nebeneinander mit im Wesentlichen parallelen und/oder antiparallelen Längsachsen.

Vorzugsweise ist der Schwerpunkt des Rotorblatts bzw. einer Kombination des Rotorblatts mit einer Rotornabe oberhalb vom Transportwagen bzw. der Aufnahmevorrichtung angeordnet. Vorzugsweise sind genau drei Rotorblätter, die für eine einzige Windenergieanlage vorgesehen sind, auf dem Schwimmkörper angeordnet. Vorzugsweise ist ferner eine Nabe an einem Rotorblatt vormontiert und auf dem Schwimmkörper angeordnet. Ferner sind auch ein Maschinenhaus der Windenergieanlage oder ein oder mehrere Turmsegmente der Windenergieanlage auf dem Schwimmkörper angeordnet.

Vorzugsweise ist der Transportwagen ein schienengebundener Transportwagen, so dass eine Sollpositionierung des Transportwagens auf einem Verfahrweg zur Montage eines Rotors aus zwei oder drei Rotorblättern gegeben ist. Die Schienen können hierbei übliche Zugschienen sein oder aber mit Zähnen versehene Schienen, die in Eingriff mit jeweils wenigstens einem Zahnrad des Transportwagens gelangen können. Vorzugsweise ist die Aufnahmevorrichtung auf dem Schwimmkörper lösbar fixiert. Die Transportwagen können auch als Schlitten ausgeführt werden, die sich auf einer vorgegebenen Bahn bewegen oder in einer vorgegebenen Bahn bewegen. Die Bahn könnte beispielsweise mit Rollen ausgestattet sein, auf denen der als Schlitten ausgeführte Transportwagen bewegt wird. Vorzugsweise ist eine Drehmechanik beim Transportwagen vorgesehen, mittels derer das jeweilige aufliegende Rotorblatt in einer horizontalen Ebene verschwenkbar ist.

Weiterhin ist vorteilhaft eine Justiervorrichtung vorgesehen, um eine seitliche und/oder vertikale Justierung des Rotorblattes zur Montage an der Nabe zu ermöglichen.

Vorzugsweise weist wenigstens ein Transportwagen eine Drehmechanik zum Verschwenken eines auf dem Transportwagen aufliegenden Rotorblatts in einer horizontalen Ebene auf. Ferner vorzugsweise weist wenigstens ein Transportwagen und/oder eine Aufnahmevorrichtung eine Justiervorrichtung zur horizontalen und/oder vertikalen Justierung eines auf dem Transportwagen und/oder der Aufnahmevorrichtung aufliegenden Rotorblatts zur Montage an eine Nabe auf. Hierdurch ist insbesondere eine lineare Bewegung in vertikaler und/oder in horizontaler Richtung quer zur Längsachse eines Rotorblatts möglich, um eine Feinjustage für die Montage an einer Rotornabe zu ermöglichen. Außerdem kann auch eine kurze lineare Bewegung in Längsachse des Rotorblatts ermöglicht sein. Die Aufnahmevorrichtung kann hierbei lösbar fixierbar mit dem Schwimmkörper verbunden sein. Vorzugsweise sind auf dem Schwimmkörper mehrere Orte vorgesehen, an denen die Aufnahmevorrichtung bzw. mehrere Aufnahmevorrichtungen montiert werden können bzw. montierbar sind. Die Montagemöglichkeiten der jeweiligen Aufnahmevorrichtung können an diskreten Orten auf dem Schwimmkörper sein oder aber es kann auch eine bereichsweise kontinuierliche Positionierung vorgesehen sein.

Vorzugsweise sind für die drei Rotorblätter drei Transportwagen oder zwei Transportwagen mit einer, insbesondere lösbar fixierbaren, Aufnahmevorrichtung oder ein Transportwagen mit zwei, insbesondere lösbar fixierbaren, Aufnahmevorrichtungen oder drei, insbesondere lösbar fixierbaren Aufnahmevorrichtungen vorgesehen. Die Aufnahmevorrichtungen sind vorzugsweise auf dem Schwimmkörper lösbar fixierbar.

Es ist eine Montage-Plattform für die Montage von Windenergieanlagen angegeben, wobei eine Aufnahmevorrichtung vorgesehen ist, die zur Aufnahme wenigstens eines Teils eines Schwimmkörpers vorgesehen ist, gelöst, wobei die Aufnahmevorrichtung, insbesondere die Aussparung, formkomplementär zu dem aufzunehmenden Teil des Schwimmkörpers ist, wobei die Aufnahmevorrichtung, insbesondere die Aussparung, seitlich in der Montage-Plattform, insbesondere Jack-up-Plattform, angeordnet ist, wobei die Aufnahmevorrichtung bzw. die Aussparung eine Vertiefung in der Montage-Plattform, insbesondere Jack-up-Plattform, ist. Vorzugsweise ist die Montage-Plattform eine Jack-up-Plattform. Durch die bevorzugte Jack-up-Plattform kann der Schwimmkörper wenigstens teilweise so aufgenommen werden, dass dieser lösbar fest mit der Jack-up-Plattform verbunden werden kann, so dass der Schwimmkörper zusammen mit der Jack-up-Plattform über die Was- seroberfläche angehoben werden kann. Hierzu weist die Jack-up-Plattform übliche Beine auf, die auf dem Meeresgrund aufliegend verfahren werden können und entsprechend durch ein weiteres Verfahren der Standbeine gegenüber der Jack-up-Plattform wird diese dann angehoben.

Der Schwimmkörper wird in der Aufnahmevorrichtung zu wenigstens ein Drittel, bevorzugt zur Hälfte bis zum ganzen Schwimmkörper, also vollständig, in der Aufnahmevorrichtung bzw. Aussparung aufgenommen.

Formkomplementär ist im Rahmen der Erfindung insbesondere funktionell formkomplementär. Hierunter wird verstanden, dass wenigstens ein Teil des Schwimmkörpers von der Form her in die Aufnahmevorrichtung bzw. Aussparung hineinpasst, wobei von den Ausmaßen ein Toleranzbereich von 5% durchaus zulässig ist, so dasszwar ein Kontakt der Begrenzungen des Teils des Schwimmkörpers zur Aufnahmevorrichtung bzw. zur Aussparung wünschenswert ist, ein geringfügiger Abstand zu den Aufnahmevorrichtungswänden bzw. Aussparungswänden kann allerdings toleriert werden.

Die Aufnahmevorrichtung bzw. die Aussparung geht dann vorzugsweise quer und ganz über die Montage-Plattform oder Jack-up-Plattform hinüber bzw. erstreckt sich voll über beispielsweise die Breite der Montage-Plattform bzw. Jack-up-Plattform. Vorzugsweise weist die Aufnahmevorrichtung bzw. die Aussparung eine untere Fläche auf bzw. Tragelemente, die beim Einbringen des Teils des Schwimmkörpers den Schwimmkörper von unten stützt.

Es sind lösbare Verbindungsmittel für eine, insbesondere starre, Verbindung zwischen der Montage-Plattform bzw. der Jack-up-Plattform und dem Schwimmkörper vorgesehen. Hierbei kann es sich um ausreichend stabile Bolzen handeln, die nach Einbringen des Teils des Schwimmkörpers in entsprechende Aussparungen im Schwimmkörper eingebracht werden können, und zwar ausgehend von den Seiten der Aussparung und auch von unten von der Aussparung nach oben in den Schwimmkörper hinein. Die entsprechenden Bolzen können federvorgespannt sein und/oder hydraulisch bewegbar sein. Ferner können die Bolzen entsprechend angeschrägt sein, um bei einem Kontakt mit dem Schwimmkörper automatisch weggedrückt zu werden, so dass diese bei Erreichen der Aussparung im Schwimmkörper in die Aussparung bewegt werden können. Dies geschieht vorzugsweise auch automatisch.

Es ist eine Vorrichtung zum Wellenglätten vor der Aufnahmevorrichtung bzw. der Aussparung der Montage-Plattform bzw. der Jack-up-Plattform vorgelagert. Hierbei handelt es sich beispielsweise um einen Wellenzaun, der im Wasser positioniert wird, um durch Wellengang hervorgerufene Probleme zu minimieren.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Draufsicht auf eine Jack-up-Plattform, in deren Aussparung ein Schwimmkörper eingebracht ist,
- Fig. 2: eine schematische Draufsicht der Kombination der Jack-up-Plattform mit dem Schwimmkörper, wobei Teile, die in Fig. 1 dargestellt waren, entfernt wurden und teilweise umpositioniert wurden,
- Fig. 3: eine schematische Draufsicht auf die Kombination der Jack-up-Plattform mit dem Schwimmkörper in fortgeschrittenem Montagezustand eines Rotors,
- Fig. 4: eine schematische Draufsicht auf eine Kombination einer Jack-up-Plattform mit einem Schwimmkörper in noch weiter fortgeschrittenem Zustand der Montage des Rotors,
- Fig. 5: eine schematische Draufsicht auf eine Kombination der Jack-up-Plattform mit einem Schwimmkörper bei weiterem Fortschritt der Entnahme von Elementen einer Windenergieanlage,
- Fig. 6: eine schematische Seitenansicht einer Jack-up-Plattform,
- Fig. 7: eine schematische Draufsicht auf die Jack-up-Plattform aus Fig. 6,
- Fig. 8: eine schematische Seitenansicht einer weiteren Jack-up-Plattform,
- Fig. 9: eine schematische Draufsicht der Jack-up-Plattform aus Fig. 8,
- Fig. 10: eine schematische Draufsicht auf einen Schwimmkörper und
- Fig. 11: eine weitere schematische Draufsicht auf einen Schwimmkörper.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

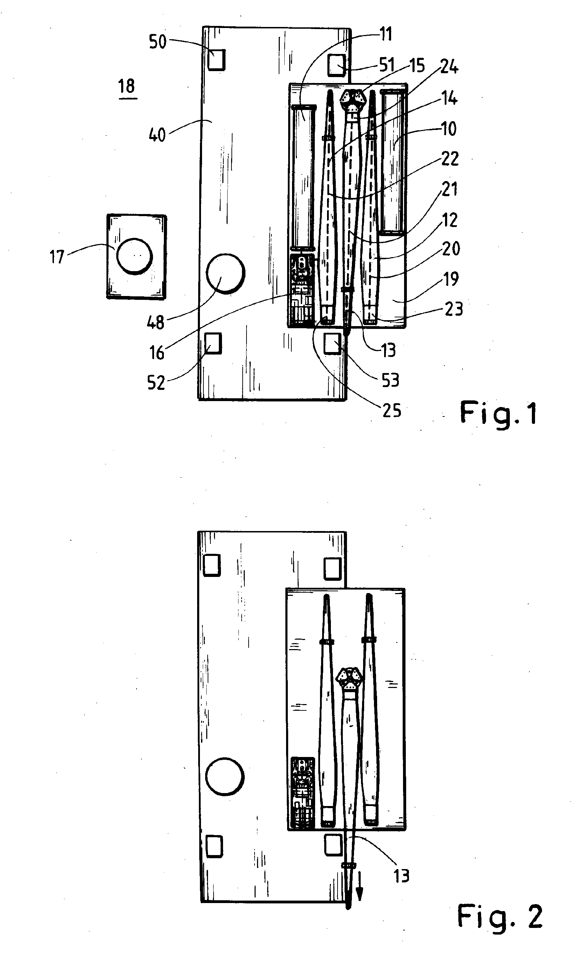

In Fig. 1 ist eine schematische Draufsicht einer Kombination einer Jack-up-Plattform dargestellt, die als Jack-up-Barge 40 ausgestaltet ist, mit einem Schwimmkörper 19, der beispielsweise ein Schwimmponton sein kann. Anstelle eines Schwimmpontons kann auch ein Schiff mit eigenem Antrieb vorgesehen sein.

Auf dem Schwimmkörper 19 sind Teile bzw. Komponenten einer Windenergieanlage angeordnet, die auf eine Gründung 17 montiert werden sollen. Es sind insbesondere zwei Turmsegmente 10, 11, drei Rotorblätter, 12, 13, 14, eine Rotornabe 15, die an dem Rotorblatt 13 schon befestigt ist bzw. vormontiert ist, und ein Maschinenhaus 16 zu erkennen. Unter dem Begriff Maschinenhaus 16 wird auch der Begriff Gondel verstanden. Die Gründung 17 befindet sich auf offener See 18, also offshore. Die Jack-up-Barge 40 weist Standbeine 50, 51, 52, 53 auf, die gegenüber der Plattform 40 bzw. der Jack-up-Barge 40 verfahren werden können. So dient die Jack-up-Barge 40 dazu, auf dem Wasser verfahren zu werden, und zwar zum Aufstellort einer Windenergieanlage, um dann dort mittels des auf der Jack-up-Barge 40 angeordneten Krans 48 die Windenergieanlage aufzubauen. Hierzu wird ein fester Stand auf dem Meeresboden benötigt. Für einen festen Stand auf dem Meeresboden werden die Standbeine 50, 51, 52, 53 nach unten verfahren, so dass diese in Kontakt mit dem Meeresboden, der nicht dargestellt ist, gelangen. Nach Kontakt wird die Jack-up-Barge "hochgejackt", also nach oben verfahren, so dass die Plattform bzw. die Barge 40 oberhalb vom Meeresspiegel angeordnet ist.

Der Schwimmkörper 19, der als Barge oder Ponton ausgestaltet sein kann, wird in einem Hafen mit einer Gondel bzw. einem Maschinenhaus 16, zwei Turmsektionen bzw. Turmsegmenten 10, 11 einer Rotornabe 15 mit fertig montiertem Rotorblatt 13 sowie zwei weiteren Rotorblättern 12, 14 beladen. Die Rotorblätter sind hierbei im Wesentlichen parallel zueinander angeordnet. Dieses ist genau gesagt für die Rotorblätter 12, 14 der Fall. Das Rotorblatt 13 ist antiparallel, also um 180° gedreht auf dem Schwimmkörper 19 zu den Längsachsen der anderen Rotorblätter 12 und 14 angeordnet. Die Rotorblätter 12, 13 und 14 sind vorzugsweise in einer Ebene angeordnet, die vorzugsweise parallel zu einer Oberfläche des Schwimmkörpers ist und insbesondere horizontal.

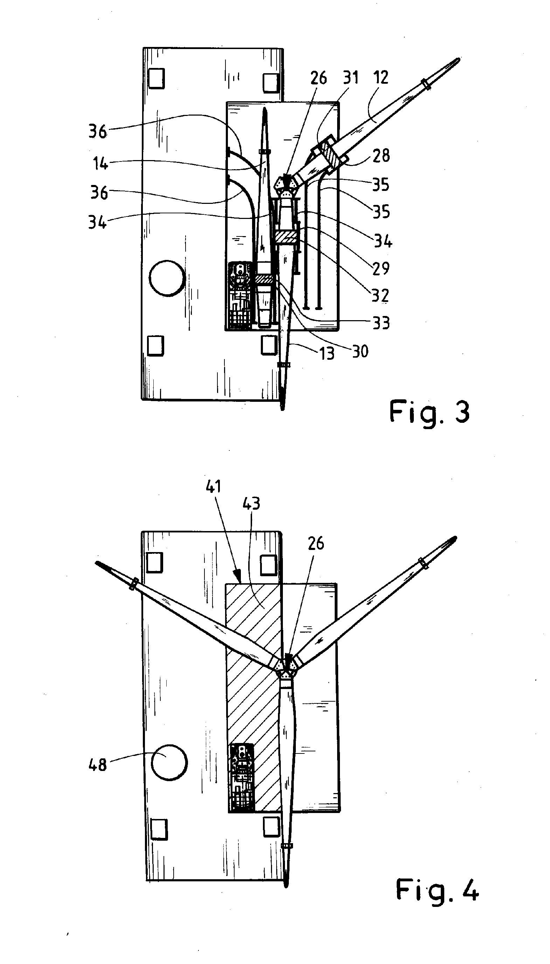

Der fertig beladene Schwimmkörper 19 wird beispielsweise mit einem Schlepper zum Zielgebiet, also in Richtung der Gründung 17 gezogen. Die Jack-up-Barge 40 kann dann schon an diesem Ort sein oder wird mit "eingezogenen" Standbeinen 50, 51, 52, 53 dorthin verholt. In dieser Phase wird der Schwimmkörper 10 in die vorgesehene Aussparung 41, 42 bzw. Bucht der Jack-up-Barge mittels beispielsweise eines Schleppers gedrückt. Um den Seegang zu minimieren, kann hierzu ein Wellenzaun 46 oder 47 vorgesehen sein. Hierzu werden in den folgenden Figuren noch Ausführungen gemacht. Nach dem erfolgreichen Einbringen bzw. Andocken des Schwimmkörpers 19 in der Aussparung 41, 42, die in den Figuren 4 und 6 bis 9 dargestellt sind, werden die Ballasttanks des Schwimmkörpers 19 möglichst schnell gelenzt. Danach wird die Jack-up-Barge mit dem Schwimmkörper 19 gejackt.

Bei Verwendung eines Halbtauchers als Montage-Plattform können alternativ die Ballast-Tanks möglichst schnell geflutet werden, nachdem sie zuvor zum Andocken vollständig gelenzt wurden und der Schwimmkörper somit in die Aufnahmevorrichtung des abgesenkten Halbtauchers einschwimmen konnte.

In den Figuren 1 bis 5 ist die Montage der Windenergieanlage und insbesondere die Montage des Rotors bestehend aus den drei Rotorblättern 12, 13, 14 sowie der Rotornabe 15 schematisch dargestellt. Nach dem Verbinden des Schwimmkörpers 19 mit der Jack-up-Barge 40 und dem Anheben der Kombination bestehend aus der Jack-up-Barge 40 und dem Schwimmkörper 19 werden zunächst die Turmsegmente 10, 11 mittels des Krans 48 vom Schwimmkörper 19 entnommen und auf die Gründung 17 aufgebracht. Nach Entnahme der Turmsegmente 10 bzw. währenddessen wird mit der Positionierung des Rotorblatts 13, wie in Fig. 2 angedeutet ist, begonnen. Das Rotorblatt 13 wird auf einem in Fig. 2 nicht dargestellten aber in Fig. 3 dargestellten Schienensystem, bestehend aus den Schienen 34, nach achtern verfahren. Achtern ist in Fig. 2 nach unten in Pfeilrichtung.

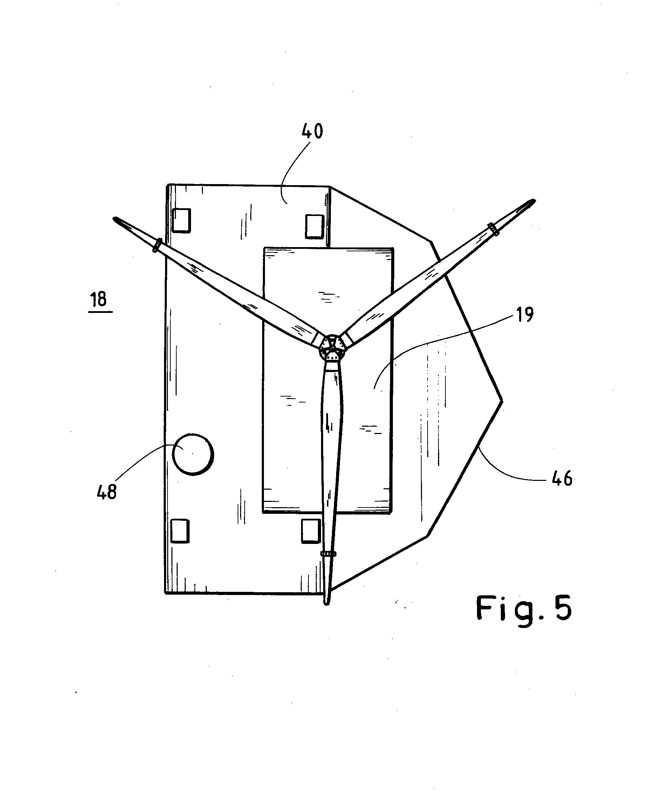

In Fig. 3 ist schematisch der weitere Fortgang des Zusammenbaus des Rotors dargestellt. Inzwischen wurde das Rotorblatt 12 über ein mit dem Transportwagen 28, auf dem das Rotorblatt über beispielsweise ein Fixierband 31 befestigt ist, auf einem Schienensystem 35 so verfahren, dass die Rotorblattwurzel in Richtung des Zentrums 26 zeigt. Die Rotorblattwurzel kann dann mit der Rotornabe 15 verbunden werden. Es erfolgt dann auch ein Verfahren des Rotorblatts 14 auf einem entsprechenden Transportwagen 30, auf dem das Rotorblatt 14 mittels eines Fixierbands 33 befestigt ist, auf einem Schienensystem 36. Die Endposition ist in Fig. 4 schematisch dargestellt. In dieser Position, in der die Blattwurzel des Rotorblatts 14 zum Zentrum 26 zeigt, kann das Rotorblatt 14 mit der Rotornabe 15 verbunden werden. Es erfolgt danach auch das Löschen bzw. Montieren des Maschinenhauses 16, wie im Übergang von Fig. 4 zu Fig. 5 angedeutet ist. Schließlich wird der Rotor auf übliche Art und Weise mittels des Krans 48 angehoben und an dem Maschinenhaus befestigt. Es ist auch möglich, dass das jeweilige Rotorblatt relativ zum Transportwagen im Wesentlichen horizontal verschwenkbar ist. Hierdurch kollidieren die Rotorblätter beim Verfahren nicht miteinander. Der jeweilige Transportwagen kann dazu eine Rotationsvorrichtung aufweisen, an der das Rotorblatt befestigt ist bzw. aufliegt und die gegenüber einem unteren Teil des Transportwagens verschwenkbar ist. Bevorzugt weist der Transportwagen eine Justiervorrichtung auf, mit der das Rotorblatt in seitlicher und/oder vertikaler Richtung justiert werden kann, um eine passgenaue Montage in die Rotornabe 15 zu ermöglichen.

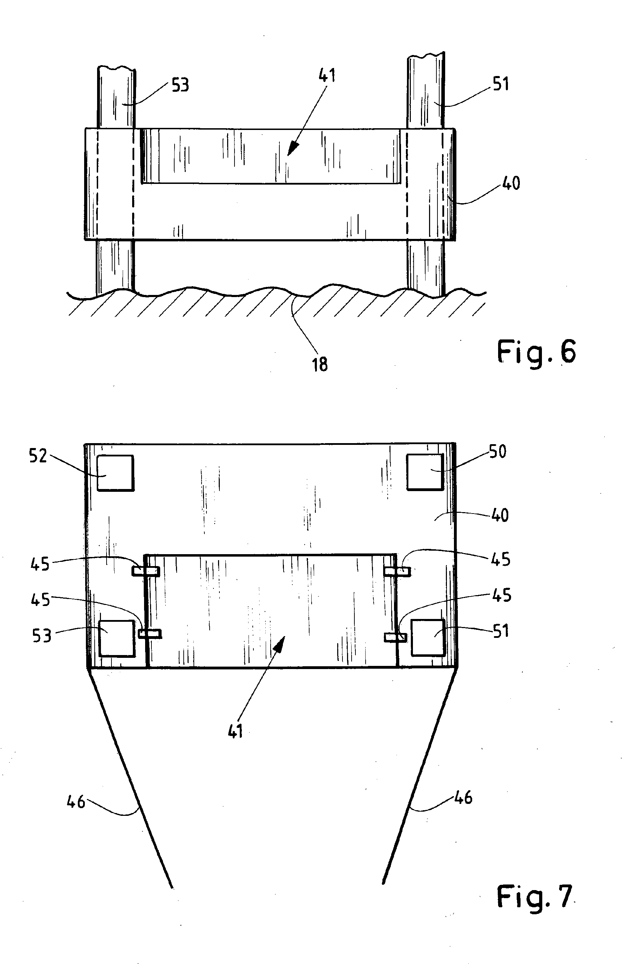

In Fig. 4 ist noch die Aussparung 41 in der Jack-up-Barge 40 angedeutet und der aufgenommene Teil 43 des Schwimmkörpers 19 schraffiert dargestellt. Es ist zu erkennen, dass die Hälfte des Schwimmkörpers 19 in der Aussparung 41 aufgenommen ist. Die Aussparung ist noch einmal in Fig. 6 deutlicher dargestellt. Hier ist zu erkennen, dass die Aussparung von der Höhe her ungefähr die Hälfte der Höhe der Jack-up-Barge 40 ausmacht und auch einen Boden aufweist, auf dem der Schwimmkörper 19 aufliegen kann. In Fig. 6 ist die Jack-up-Barge 40 hochgefahren und befindet sich oberhalb des Wassers der offenen See 18.

Fig. 7 zeigt schematisch eine Draufsicht auf die Jack-up-Barge 40 aus Fig. 6, wobei insbesondere hier wie auch in Fig. 5 ein Wellenzaun 46 angedeutet ist. Der Wellenzaun 46 kann, wie in Fig. 5 dargestellt ist, in dem Moment in dem der Schwimmkörper 19 in der Aussparung 41 aufgenommen ist, geschlossen sein. Bevor der Schwimmkörper eingebracht wird, muss der Wellenzaun 46, wie in Fig. 7 angedeutet ist, geöffnet sein.

In Fig. 7 sind noch Rastvorrichtungen 45 dargestellt, die in Aussparungen im Schwimmkörper 19, die nicht dargestellt sind, einrasten können.

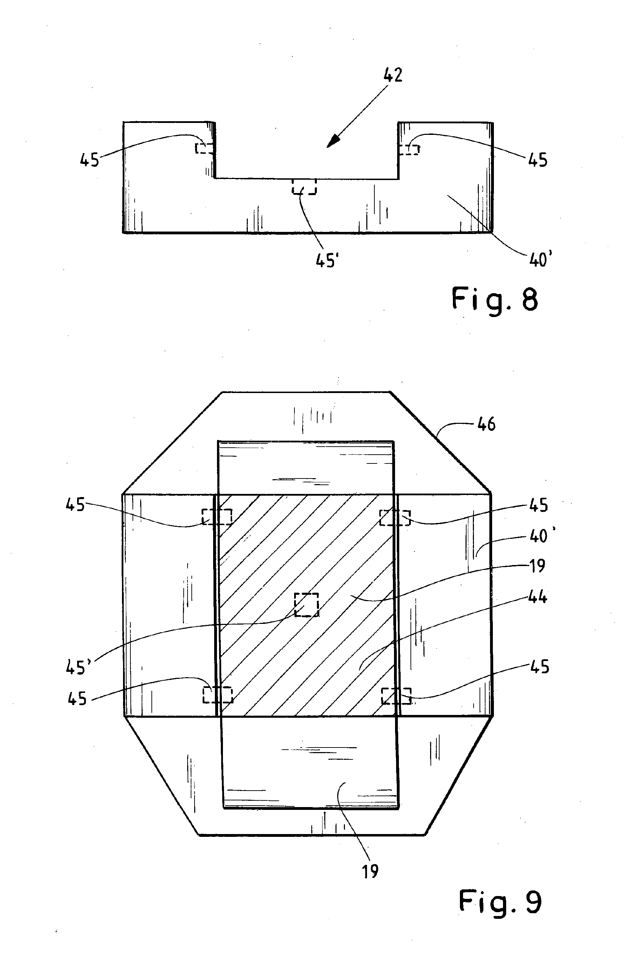

Fig. 8 zeigt eine weitere Jack-up-Barge 41' in schematischer Seitenansicht. Diese Jack-up-Barge 41' hat eine durchgehende Aussparung 42, also eine Aussparung, die sich über die ganze Jack-up-Barge 40' erstreckt. Der Schwimmkörper 19 wird dann vollständig in der Aussparung 41 aufgenommen, bzw. wenn der Schwimmkörper 19 länger ist als die Breite der Jack-up-Barge, kann der Schwimmkörper 19 auf der einen Seite und/oder auf der anderen Seite herausragen. Eine derartige in Fig. 9 gezeigte Anordnung bietet den Vorteil, dass die Beine der Jack-up-Barge 41' gleichmäßig belastet werden.

In Fig. 8 und Fig. 9 sind ferner auch Rastvorrichtungen 45 und 45' angedeutet, die in Wirkverbindung mit dem Schwimmkörper 19 gelangen können. Die Rastvorrichtungen 45 sind seitlich in den Schwimmkörper 19 einzubringen und die Rastvorrichtungen 45' von unten.

In dieser Ausgestaltung der Jack-up-Barge 41' sind zwei Wellenzäune 46 und 47 sinnvoll. Der Schwimmkörper 19 kann vorzugsweise ungefähr 1.000 t transportieren. Dieser hat dann eine Leermasse von 250 t bis 300 t und Ausmaße von 50m bis 90m x 20m bis 30 m.

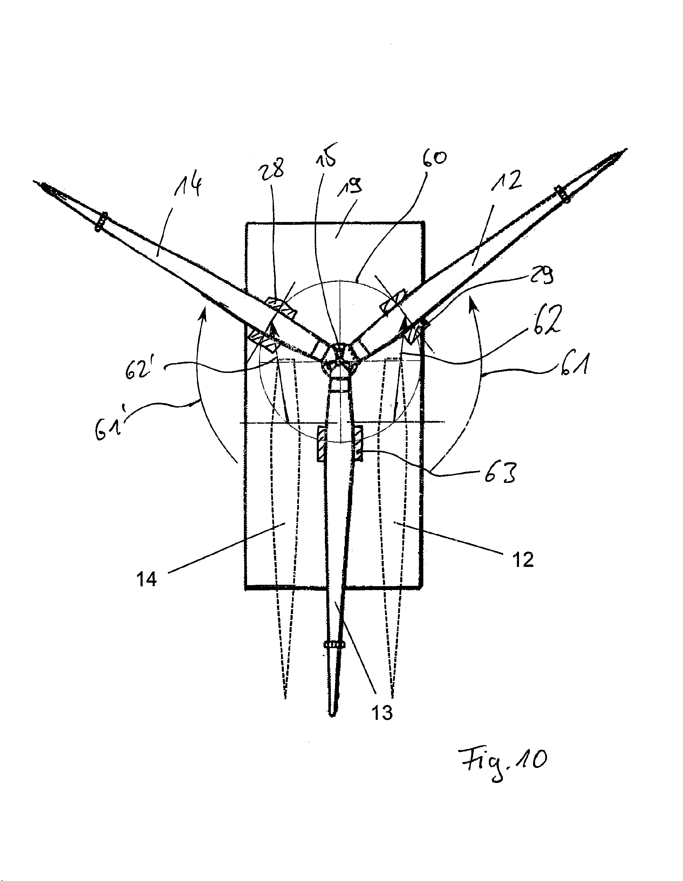

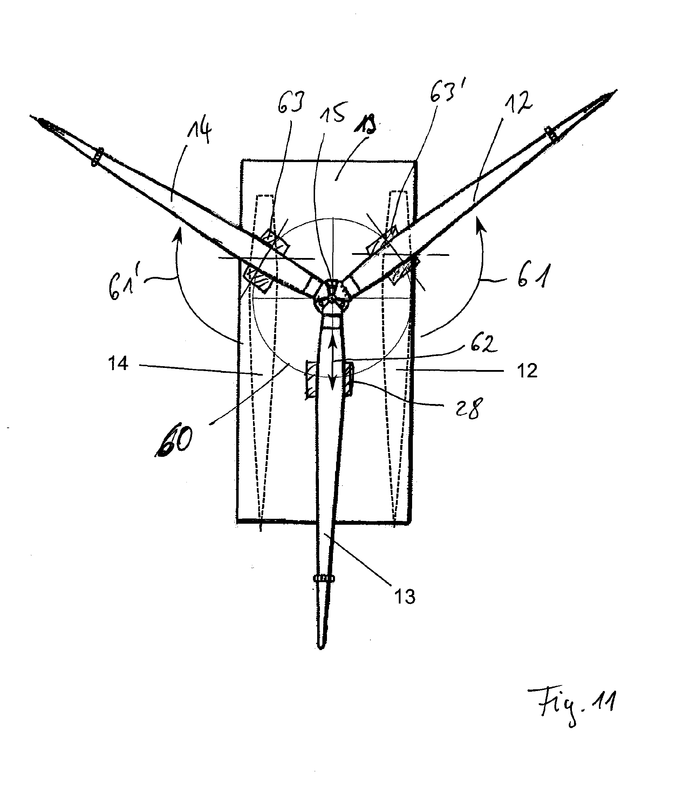

In Fig. 11 ist schematisch eine Draufsicht auf einen Schwimmkörper 19 dargestellt, auf dem nur noch die entsprechenden Rotorblätter 12-14 mit einer Rotornabe 15 dargestellt sind. Die Transportposition der Rotorblätter 12 und 14 sind gestrichelt dargestellt. Die Transportposition des Rotorblatts 13 entspricht der dargestellten Position des Rotorblatts 13 in Fig. 10. Der weitere Platz des Schwimmkörpers 19 ist mit weiteren Elementen der Windenergieanlage, beispielsweise Turmsegmenten und dem Maschinenhaus, belegt gewesen, die allerdings in der Darstellung der Fig. 10 schon gelöscht sind.

Das Rotorblatt 13 liegt auf einer Aufnahmevorrichtung 63 auf, die lösbar mit dem Schwimmkörper 19 fixiert ist. Das Rotorblatt 13 hat somit die gewünschte Montageposition. Vorzugsweise ist die Rotornabe 15 schon an dem Rotorblatt 13 montiert bzw. vormontiert. Um nun auch die Rotorblätter 12 und 14 an die Rotornabe 15 zu montieren, werden diese auf einem kurzen Verfahrweg auf dem Transportwagen 28 und 29 verfahren. Die Verfahrwege sind mit den Bezugszeichen 62 und 62' dargestellt. Während des linearen Verfahrens der Rotorblätter entlang der Verfahrwege 62 und 62' bzw. der Verfahrbewegung 62, 62' können die Rotorblätter 12 und 14, wie dieses durch die Verschwenkbewegung 61, 61' dargestellt ist, auch verschwenkt werden. Diese werden entsprechend um 120° jeweils geschwenkt bzw. verschwenkt. Die Schwerpunkte der Rotorblätter liegen in etwa auf dem dargestellten Schwerpunktkreis 60. Anschließend kann mittels der an den einzelnen Transportwaren 28 und 29 vorgesehenen Justiervorrichtungen die Montage der Blätter an der Rotornabe 15 erfolgen. Das Verschwenken der Rotorblätter kann auch nach der Verfahrbewegung 62 bzw. 62' erfolgen.

Fig. 11 zeigt eine weitere Draufsicht auf einen Schwimmkörper 19, mit der eine weitere Variante der Montage der Rotorblätter 12-14 an einer Rotornabe 15 dargestellt werden soll. Hierbei sind die Rotorblätter 12 und 14 auf Aufnahmevorrichtungen 63 und 63' aufgebracht. Die Aufnahmevorrichtungen 63 und 63' sind lösbar auf dem Schwimmkörper 19 fixiert. Auch ist zunächst gestrichelt die Transportposition der Rotorblätter 12 und 14 dargestellt. Aus dieser Transportposition müssen die Rotorblätter 12 und 14 nur noch verschwenkt werden, und zwar jeweils um 120° entlang der Verschwenkbewegung 61 bzw. 61'.

Das Rotorblatt 13, das in der Mitte angeordnet ist, kann entweder beim Transport so angeordnet sein wie in Fig. 11 dargestellt. In diesem Fall kann das Rotorblatt 13 nicht wie in Fig. 11 dargestellt, auf einem Transportwaren 28 aufliegen, sondern auch auf einer Aufnahmevorrichtung, die lösbar mit dem Schwimmkörper 19 verbunden ist. In diesem Fall muss dann das Rotorblatt 13 nicht mehr wesentlich bewegt werden. Sofern die Rotornabe 15 auf dem Rotorblatt 13 montiert bzw. vormontiert ist, ist nicht einmal eine Justiervorrichtung auf der Aufnahmevorrichtung 28 für eine lineare, horizontale und/oder vertikale Justiermöglichkeit notwendig.

In Fig. 11 ist nun allerdings als Beispiel das Rotorblatt 13 auf einem Transportwagen 28 aufliegend dargestellt. Beim Transport kann das Rotorblatt 13 dann auch etwas höher angeordnet sein, um quer zur Längsachse des Rotorblatts 13 ungefähr auf gleicher Höhe wie die Rotorblätter 12 und 14, und zwar in der horizontalen Ebene, also in Draufsicht auf den Schwimmkörper 19, zu liegen. Um nun eine Montage des Rotors vorzusehen, wird zunächst das Rotorblatt 13 in Fig. 11 nach unten verfahren, und zwar gemäß der Verfahrbewegung 62 und anschließend die Rotorblätter 12 und 14 um jeweils 120° entlang der Verschwenkbewegung 61 bzw. 61' verschwenkt. Mittels einer auf den Aufnahmevorrichtungen 63 und 63' jeweils vorhandenen Justiervorrichtung können die Rotorblätter 12 bzw. 14 entsprechend für die Montage an der Rotornabe 15 justiert werden.

Beim Transport der Rotorblätter auf dem Schwimmkörper 19 zum Aufstellungsstandort auf hoher See kann der Freiraum zwischen den Rotorblättern 12, 13 und 14 mit Turmsegmenten und/oder einem Maschinenhaus belegt werden.

Bei entsprechend optimaler Auslegung und entsprechender Größe des Schwimmkörpers 19 ist, wie oben schon ausgeführt, eine Montagemöglichkeit und Transportmöglichkeit gegeben, bei der kein Rotorblatt auf einem Transportwagen angeordnet ist, sondern jedes Rotorblatt auf einer Aufnahmevorrichtung. Hierzu wird dann das Rotorblatt 13 schon in der Montageposition für den Transport angeordnet. Von Vorteil ist es, wenn die Schwerpunkte der Rotorblätter auf dem angedeuteten Schwerpunktkreis 60 liegen.

Bei Verwendung eines Schwimmkörpers 19 für verschieden große Rotoren bzw. verschieden lange Rotorblätter sind unterschiedliche Montagepositionen der Aufnahmevorrichtungen 63 bzw. 63' und ggf. noch einer weiteren Aufnahmevorrichtung, die den Transportwagen 28 ersetzt, möglich.

Der Umfang des Patentschutzes ist durch die Ansprüche definiert.

### Bezugszeichenliste

- 10: Turmsegment
- 11: Turmsegment
- 12: Rotorblatt
- 13: Rotorblatt
- 14: Rotorblatt
- 15: Rotornabe
- 16: Maschinenhaus
- 17: Gründung
- 18: Wasser
- 19: Schwimmkörper
- 20: Längsachse
- 21: Längsachse
- 22: Längsachse
- 23: Blattwurzel
- 24: Blattwurzel
- 25: Blattwurzel
- 26: Zentrum
- 28: Transportwagen
- 29: Transportwagen
- 30: Transportwagen
- 31: Fixierband
- 32: Fixierband
- 33: Fixierband
- 34: Schienen
- 35: Schienen
- 36: Schienen
- 40, 40': Jack-up-Barge
- 41: Aussparung
- 42: Aussparung
- 43: aufgenommener Teil des Schwimmkörpers
- 44: aufgenommener Teil des Schwimmkörpers
- 45, 45': Rastvorrichtung
- 46: Wellenform
- 47: Wellenform
- 48: Kran
- 50: Standbein
- 51: Standbein
- 52: Standbein
- 53: Standbein
- 60: Schwerpunktkreis
- 61, 61': Verschwenkbewegung
- 62, 62': Verfahrbewegung
- 63 ,63': Aufnahmevorrichtung

## Patentansprüche

1. Verfahren zur Montage eines Rotors (12-15) einer Windenergieanlage auf offener See (18), wobei wenigstens zwei Rotorblätter (12-14) auf einem Schwimmkörper (19) zunächst im Wesentlichen parallel und/oder antiparallel angeordnet sind, wobei anschließend auf oder über dem Wasser der offenen See (18) die wenigstens zwei Rotorblätter (12-14) auf dem Schwimmkörper (19) relativ zueinander verfahren werden, so dass die Blattwurzeln (23-25) der Rotorblätter (12-14) zueinander und/oder in Richtung eines gemeinsamen Zentrums (26) gerichtet sind, wobei das gemeinsame Zentrum (26) ein Schnittpunkt der verlängerten Längsachsen (20-22) der Rotorblätter (12-14) über die jeweilige Blattwurzel (23-25) hinaus ist, und Montieren wenigstens eines Rotorblatts (12-14) an eine Rotornabe (15), die im Bereich des Zentrums (26) angeordnet ist, wobei die Rotornabe (15) an einem Rotorblatt (13) vormontiert ist oder wird, wobei das relativ zueinander Verfahren der Rotorblätter (12-14) in einer im Wesentlichen horizontalen Ebene geschieht.

2. Verfahren nach Anspruch 1, **dadurch gekennzeichnet, dass** die Rotorblätter jeweils auf einem, insbesondere schienengebundenen, Transportwagen (28-30) und/oder eine, insbesondere auf dem Schwimmkörper (19) lösbar fixierte, Aufnahmevorrichtung (63, 63') aufgelegt sind.

3. Anordnung von wenigstens zwei Rotorblättern (12-14) einer Windenergieanlage und einem Schwimmkörper (19), der für den Transport der Rotorblätter (12-14) zu einem Aufstellungsort (17) der Windenergieanlage auf offener See (18) vorgesehen ist, wobei die Rotorblätter (12-14) auf dem Schwimmkörper (19) nebeneinander angeordnet sind, so dass die Längsachsen (20-22) der Rotorblätter (12-14) parallel und/oder antiparallel zueinander sind, wobei für jedes Rotorblatt (12-14) ein auf dem Schwimmkörper (19) lösbar fixierbarer Transportwagen (28-30) oder eine Aufnahmevorrichtung (63, 63') vorgesehen ist, auf dem oder der das jeweilige Rotorblatt (12-14) aufgelegt, insbesondere lösbar fixiert aufgelegt, ist, wobei wenigstens eine Aufnahmevorrichtung (63, 63') eine Drehmechanik zum Verschwenken eines auf der Aufnahmevorrichtung (63, 63') aufliegenden Rotorblatts (12-14) in horizontaler Ebene aufweist.

4. Anordnung nach Anspruch 3, **dadurch gekennzeichnet, dass** wenigstens ein Transportwagen (28-30) eine Drehmechanik zum Verschwenken eines auf dem Transportwagen (28-30) aufliegenden Rotorblatts (12-14) in horizontaler Ebene aufweist.

5. Anordnung nach Anspruch 3 oder 4, **dadurch gekennzeichnet, dass** wenigstens ein Transportwagen (28-30) und/oder eine Aufnahmevorrichtung (63, 63') eine Justiervorrichtung zur horizontalen und/oder vertikalen Justierung eines auf dem Transportwagen (28-30) und/oder der Aufnahmevorrichtung (63, 63') aufliegenden Rotorblatts (12-14) zur Montage an eine Rotornabe (15) aufweist.

6. Anordnung nach einem der Ansprüche 3 bis 5, **dadurch gekennzeichnet, dass** genau drei Rotorblätter (12-14), die für eine einzige Windenergieanlage vorgesehen sind, auf dem Schwimmkörper (19) angeordnet sind.

7. Anordnung nach Anspruch 6, **dadurch gekennzeichnet, dass** für die drei Rotorblätter (12-14) drei Transportwagen (28-30) oder zwei Transportwagen (28-30) mit einer, insbesondere lösbar fixierbaren, Aufnahmevorrichtung (63, 63') oder ein Transportwagen (28-30) mit zwei, insbesondere lösbar fixierbaren, Aufnahmevorrichtungen (63, 63') oder drei, insbesondere lösbar fixierbaren, Aufnahmevorrichtungen (63.63') vorgesehen sind.

8. Anordnung nach einem der Ansprüche 3 bis 7, **dadurch gekennzeichnet, dass** der Transportwagen (28-30) ein schienengebundener Transportwagen ist und/oder dass die Aufnahmevorrichtung (63 63') auf dem Schwimmkörper (19) lösbar fixiert ist.

## Claims

1. A method of installing a rotor (12-15) of a wind turbine in open water (18), wherein at least two rotor blades (12-14) are firstly arranged substantially parallel and/or antiparallel on a buoyant body (19), wherein subsequently the at least two rotor blades (12-14) are moved relative to one another on the buoyant body (19) on or above the open water (18) so that the blade roots (23-25) of the rotor blades (12-14) are aligned towards one another and/or in the direction of a common centre (26), wherein the common centre (26) is an intersection point of the extended longitudinal axes (20-22) of the rotor blades (12-14) beyond their respective blade roots (23-25), and installing at least one rotor blade (12-14) on a rotor hub (15), which is arranged in the vicinity of the centre (26), wherein the rotor hub (15) is pre-mounted on a rotor blade (13), wherein the relative movement towards one another of the rotor blades (12-14) occurs in a substantially horizontal plane.

2. A method as claimed in Claim 1, **characterised in that** the rotor blades are placed on a respective, particularly rail-mounted, transport carriage (28-30) and/or a receiving apparatus (63, 63'), where is, in particular, releasably fixed to the buoyant body (19).

3. An arrangement of at least two rotor blades (12-14) of a wind turbine and a buoyant body (19), which is provided for the transport of the rotor blades (12-14) to an assembly location (17) of the wind turbine in open water (18), wherein the rotor blades (12-14) are arranged next to one another on the buoyant body (19) so that the longitudinal axes (20-22) of the rotor blades (12-14) are parallel and/or antiparallel to one another, wherein a transport carriage (28-30), which is releasably fixable on the buoyant body (19), or a receiving device (63, 63') is provided on which the respective rotor blade (12-14) is placed, particularly placed so as to be releasably fixed in position, wherein at least one receiving device (63, 63') includes a rotary mechanism for pivoting a rotor blade (12-14) resting on the receiving device (63, 63') in a horizontal plane.

4. An arrangement as claimed in Claim 3, **characterised in that** at least one transport carriage (28-30) includes a rotary mechanism for pivoting the rotor blade (12-14) resting on the transport carriage (28-30) in a horizontal plane.

5. An arrangement as claimed in Claim 3 or 4, **characterised in that** at least one transport carriage (28-30) and/or one receiving device (63, 63') includes an adjustment device for the horizontal and/or vertical adjustment of a rotor blade (12-14) resting on the transport carriage (28-30) and/or the receiving device (63, 63') for installation on a rotor hub (15).

6. An arrangement as claimed in one of Claims 3 to 4, **characterised in that** precisely three rotor blades (12-14), which are provided for a single wind turbine, are arranged on the buoyant body (19).

7. An arrangement as claimed in Claim 6, **characterised in that** three transport carriages (28-30) or two transport carriages (28-30) with one, particularly releasably fixable, receiving device (63, 63') or one transport carriage (28-30) with two, particularly releasably fixable, receiving devices (63, 63') or three, particularly releasably fixable, receiving devices (63, 63') are provided for the three rotor blades (12-14).

8. An arrangement as claimed in one of Claims 3 to 7, **characterised in that** the transport carriage (28-30) is a rail-mounted transport carriage and/or that the receiving device (63, 63') is releasably fixed on the buoyant body (19).

## Revendications

1. Procédé d'assemblage d'un rotor (12 à 15) d'une éolienne en pleine mer (18), dans lequel au moins deux pales de rotor (12 à 14) sont tout d'abord disposées sur un flotteur (19) de manière sensiblement parallèle et / ou non parallèle, dans lequel, par la suite, lesdites au moins deux pales de rotor (12 à 14) sont déplacées sur le flotteur (19) l'une par rapport à l'autre au niveau de la mer (18) ou au-dessus de ce niveau, de sorte que les racines (23 à 25) des pales de rotor (12 à 14) soient en face les unes aux autres et / ou soient dirigées en direction d'un centre commun (26), ledit centre commun (26) étant un point d'intersection des axes longitudinaux (20 à 22) des pales de rotor (12 à 14) sur la racine (23 à 25) de chaque pale de rotor, et dans lequel, enfin, au moins une pale de rotor (12 à 14) est montée sur un moyeu de rotor (15) disposé au niveau du centre (26), le moyeu de rotor (15) étant préassemblé sur une pale de rotor (13), le procédé se déroulant dans un plan sensiblement horizontal par rapport à chacune des pales de rotor (12 à 14).

2. Procédé selon la revendication 1, **caractérisé en ce que** les pales de rotor sont respectivement montées sur un chariot de transport (28 à 30), en particulier sur un rail, et / ou sur un dispositif de réception (63, 63'), en particulier sont fixées de manière amovible sur le flotteur (19).

3. Agencement d'au moins deux pales de rotor (12 à 14) d'une éolienne et d'un flotteur (19) prévu pour le transport de pales de rotor (12 à 14) sur un site (17) d'une éolienne en pleine mer (18), les pales de rotor (12 à 14) étant disposées sur le flotteur (19) les unes à côté des autres, de sorte que les axes longitudinaux (20 à 22) des pales de rotor (12 à 14) soient parallèles et/ou non parallèles entre eux, un chariot de transport (28 à 30) ou un dispositif de réception (63, 63') fixé de manière amovible sur le flotteur (19) étant prévu pour chaque pale de rotor (12 à 14), et placé respectivement sur chaque pale de rotor (12 à 14), en particulier fixé de manière amovible, et au moins un dispositif de réception (63, 63') présentant un mécanisme de rotation pour faire pivoter sur un plan horizontal un dispositif de réception (63, 63') placé sur les pales de rotor (12 à 14).

4. Agencement selon la revendication 3, **caractérisé en ce qu'**au moins un chariot de transport (28 à 30) comprend un mécanisme rotatif pour faire pivoter dans le plan horizontal la pale de rotor (12 à 14) placée sur l'un des chariots de transport (28 à 30).

5. Agencement selon la revendication 3 ou la revendication 4, **caractérisé en ce qu'**au moins un chariot de transport (28 à 30) et / ou un dispositif de réception (63, 63') comprend un dispositif de réglage pour ajuster horizontalement et / ou verticalement un chariot de transport (28 à 30) et / ou un dispositif de réception (63, 63') sur lequel est placée la pale de rotor (12 à 14) pour le montage sur un moyeu de rotor (15).

6. Agencement selon l'une quelconque des revendications 3 à 5, **caractérisé en ce qu'**exactement trois pales de rotor (12 à 14), qui sont prévues pour une seule éolienne, sont disposées sur le flotteur (19).

7. Agencement selon la revendication 6, **caractérisé en ce que** les trois pales de rotor (12 à 14) sont fournies avec trois chariots de transport (28 à 30) ou deux chariots de transport (28 à 30), munis d'un dispositif de réception (63, 63'), en particulier fixé de manière amovible, ou avec un chariot de transport (28 à 30) muni de deux dispositifs de réception (63, 63'), en particulier fixés de manière amovible, ou de trois dispositifs de réception (63, 63'), en particulier fixés de manière amovible.

8. Agencement selon l'une quelconque des revendications 3 à 7, **caractérisé en ce que** les chariots de transport (28 à 30) sont des chariots de transport sur rails et/ou **en ce que** le dispositif de réception (63, 63') est fixé de manière amovible sur le flotteur (19).
